# EUROPÄISCHE PATENTSCHRIFT

(11) **EP 1 291 210 B1**
(45) Veröffentlichungstag und Bekanntmachung des Hinweises auf die Patenterteilung: **20.02.2008**
(21) Anmeldenummer: 02019554.1
(22) Anmeldetag: 02.09.2002
(51) Int. Cl.: B60J 5/04

(54) **Aufprallträger für Kraftfahrzeug-Tür**
Impact beam for vehicle door
Barre de renfort pour porte de véhicule automobile

(30) Priorität: 05.09.2001 DE 10143447
(43) Veröffentlichungstag der Anmeldung: 12.03.2003
(73) Patentinhaber: AUDI AG, 85045 Ingolstadt (DE)
(72) Erfinder: Bönsel, Jürgen, 85113 Böhmfeld (DE)
(74) Vertreter: Engelhardt, Harald

(56) Entgegenhaltungen:
- EP-A- 0 640 504
- DE-A- 19 927 926
- DE-U- 9 206 926

## Beschreibung

Die Erfindung betrifft eine Kraftfahrzeug-Tür nach dem Oberbegriff des Anspruchs 1.

Eine bekannte gattungsgemäße Kraftfahrzeugtür (DE 92 06 926 U1) weist eine Scharnierseite und eine gegenüberliegende Schlossseite auf, sowie einen Aufprallträger, der in der Tür angeordnet ist und sich von einem Bereich an der Scharnierseite in einen scharnierfernen, schlossseitigen Bereich erstreckt. Zudem ist eine Befestigungsvorrichtung, hier eine Verschraubung zur Befestigung eines Aufprallträgerendes an einem Türteil und eine weitere Befestigungsvorrichtung, hier eine zweite Verschraubung zur Befestigung des anderen gegenüberliegenden Aufprallträgerendes an einem Türteil, insbesondere am Innenblech oder Außenblech eines Türkastens vorgesehen.

Der Aufprallträger ist als Nachrüstteil zweiteilig ausgebildet, in seiner Längserstreckung einstellbar und an die jeweiligen Gegebenheiten einer Fahrzeugtür anpassbar. Der Aufprallträger wird nachträglich bei abgenommener Türinnenverkleidung verspannungsfrei angebracht und hat ausschließlich die Funktion einer Türkastenverstärkung gegenüber einem Seitenaufprall.

Allgemein soll nach der Montage eine Kraftfahrzeug-Tür außenhautbündig und mit einem gleichmäßigen Fugenbild zwischen Tür und angrenzendem Türausschnitt justiert sein. Dies ist in der Regel durch eine hohe Fertigungsgenauigkeit der Fahrzeugtüren und der angrenzenden Karosserieteile gegeben und/oder durch Einstellmittel an den Scharnieren erreichbar. Dennoch weisen in der Serienfertigung einige Fahrzeug-Türen Verdrehungen auf, die dazu führen, dass sie nach der Montage nicht außenhautbündig an die angrenzenden Karosserieteile anschließen.

Um hier die erforderliche Außenhautbündigkeit herzustellen, wird üblicherweise ein Richtvorgang durchgeführt, wobei manuell mit erheblicher Krafteinwirkung die Fahrzeugtür in eine außenhautbündige Stellung bleibend verdreht wird. Der Richtvorgang ist insofern kritisch und schwierig als die Tür zunächst über den elastischen Bereich in den plastischen Bereich gedrückt werden muss, erst nach dem Absetzen des Werkzeugs das Ergebnis kontrolliert werden kann und ggf. mehrere Versuche erforderlich sind. Ersichtlich besteht die Gefahr, dass durch zu große Krafteinwirkung die Tür zu weit verdreht wird und damit die Außenhautbündigkeit aus der anderen Richtung fehlt. Eine genaue Ausrichtung einer solchen Tür ist somit schwierig, zeitaufwendig und von einem ungeübten Werker nur ungenügend durchführbar.

Weiter ist zur Ausrichtung einer im vorstehenden Sinne verdrehten Fahrzeugtür eine längenverstellbare Strebe bekannt (DE 199 27 926 A1), die sich als Stab von einem oberen Scharnierseitenbereich in einen unteren scharnierfernen Schlossseitenbereich eines Türkastens erstreckt. Die Strebe ist am scharnierfernen Ende mit ihrem Strebenende ortsfest angebracht. Das Strebenende im Scharnierbereich umfasst dagegen eine Stellschraube für eine Längsverstellung, so dass der Relativabstand der beiden Strebenanbindungspunkte an der Tür über die längenverstellbare Strebe veränderbar ist. Dadurch können in der Tür Verspannungskräfte erzeugt werden, die eine gezielte Verformung der Tür bewirken, wobei Türjustierungen für eine Außenhautbündigkeit und gleichmäßige Fugenbilder möglich sind. Solche Türjustierungen sind sowohl im Rohbau als auch nach Fertigstellung des Fahrzeugs durchführbar.

Nachteilig ist hier, dass für eine Ausrichtung einer relativ selten auftretenden Türverdrehung generell in jeder hergestellten Fahrzeugtür ein zusätzliches Einstellelement in der Art einer längsverstellbaren Strebe eingesetzt wird. Dies verursacht zusätzliche Material- und Montagekosten und erhöht ungünstig das Fahrzeuggewicht. Zudem ist die Einstellung mit einer Stellschraube fertigungstechnisch aufwendig und für den Fall, dass eine Ausrichtung erforderlich ist erfordert diese einen relativ hohen Zeitaufwand.

Aufgabe der Erfindung ist es eine gattungsgemäße Kraftfahrzeugtür so weiterzubilden, dass eine Türausrichtung, insbesondere eine Ausrichtung einer Türverdrehung mit einfachen und kostengünstigen Mitteln möglich ist.

Diese Aufgabe wird mit den Merkmalen des Anspruchs 1 gelöst.

Gemäß Anspruch 1 weist wenigstens eine Befestigungsvorrichtung für ein Aufprallträgerende ein Exzenter-Einstellelement auf, dessen Exzenter-Achse etwa quer zur Türebene und quer zum Aufprallträger verläuft so dass bei einer Exzenterverdrehung der Befestigungspunkt zwischen Aufprallträgerende und zugeordnetem Türteil für eine Türausrichtung im Umfang des Exzenterversatzes lageveränderlich ist. Entsprechend ist somit der Relativabstand der Anbindungspunkte des Aufprallträgers an der Fahrzeugtür bei einer Exzenterverdrehung veränderbar und einstellbar. Durch eine Exzenterverstellung aus einer spannungsfreien "Null-Lage" können somit Verspannungskräfte für eine gezielte Verformung der Tür erzeugt werden, wodurch diese ggf. außenhautbündig zu angrenzenden Karosseriebauteilen justierbar ist. Diese durch Verspannung bewirkte Türverformung erzeugt Rückstellkräfte in Richtung der Ausgangsform welche zur Aufrechterhaltung der eingestellten Türform abzustützen sind. Dies kann entweder durch eine Fixierung der eingestellten Exzenterstellung und/oder durch eine Fixierung des dem Exzenter-Einstellelement zugeordneten Aufprallträgerendes gegenüber dem angrenzenden Karosserieteil erfolgen. Die Fixierung kann auf einfache Weise durch Anziehen von Verschraubungen nach einer Exzentereinstellung erfolgen.

Ein Exzenter-Einstellelement kann in verschiedenen Ausführungsformen vorteilhaft einfach, kostengünstig und mit kleinen Abmessungen und geringem Gewicht hergestellt werden. Die Einstellung durch Verdrehen des Exzenters ist schnell, bequem und für eine Justierung der Tür mit großer Genauigkeit ausführbar. Eine solche Türeinstellung kann im Rohbau oder vorteilhaft auch bei einer montierten bereits fertig lackierten Tür erfolgen. Somit können auch in Werkstätten erforderliche Türjustierungen einfach und ohne die Gefahr einer Beschädigung der Tür durchgeführt werden.

Ein besonderer Vorteil besteht zudem in der Doppelfunktion des Aufprallträgers als Sicherheitselement bei einem Seitenaufprall und als Einstellelement für eine Türjustierung.

Die Lage des Aufprallträgers und die Lage der Anbindungspunkte sind den jeweiligen Gegebenheiten und der Geometrie einer konkreten Fahrzeugtür anzupassen um sowohl eine geeignete Sicherheitsfunktion als auch Einstellfunktion zu erhalten. Eine in der Regel günstige Anordnung ergibt sich nach Anspruch 2 indem der Aufprallträger als Diagonalträger ausgeführt ist, der sich von einem oberen Scharnierseitenbereich in einen unteren scharnierfernen Schlossbereich erstreckt.

Für die Türeinstellung ist es wesentlich, dass der Relativabstand der Aufprallträgeranbindungspunkte an der Tür lageveränderlich ist. Dies kann erreicht werden indem jedem Aufprallträgerende ein Exzenter-Einstellelement zugeordnet ist, wobei in der Regel ein Exzenter-Einstellelement an einem Aufprallträgerende ausreicht. Gemäß Anspruch 3 ist es zudem zweckmäßig dieses eine Exzenter-Einstellelement am scharnierfernen Aufprallträgerende anzubringen, da es dort mit einfachen Maßnahmen befestigbar und für eine Einstellung mit einem geeigneten Werkzeug gut zugänglich ist.

In Anspruch 4 wird eine kostengünstig herstellbare Exzenteranordnung beansprucht, wobei das Exzenter-Einstellelement aus einer kreisrunden Exzenterscheibe mit einer gegenüber dem Kreismittelpunkt um den Exzenterversatz versetzten Exzenterbohrung besteht. Die Exzenterscheibe ist in einer Ausnehmung des zugeordneten Türteils randformschlüssig und verdrehbar aufgenommen. Das zugeordnete Aufprallträgerende weist ein Eingriffelement für einen formschlüssigen Eingriff in die Exzenterbohrung auf. Ersichtlich erfolgt bei dieser einfachen Anordnung durch Verdrehen der Exzenterscheibe eine Exzenterverstellung mit der erforderlichen Verstellung des Relativabstands der Türanbindungspunkte zur Aufbringung einer Türverspannung in Verbindung mit einer Türverformung.

Für eine Fixierung der aus einer kraftfreien Nullstellung heraus verdrehten Exzenterposition wird mit Anspruch 5 vorgeschlagen, dass das Eingriffelement am Aufprallträgerende eine Fixierschraube umfasst, mit der die Exzenterstellung ggf. nach einer Exzenterverdrehung fixiert werden kann. Das Eingriffelement kann dabei unmittelbar als Schraubenbolzen ausgeführt sein. Damit ist eine sehr kompakte und kostengünstige Anordnung möglich, bei der das Exzenter-Einstellelement und das Halte- und Fixierelement im jeweiligen Befestigungspunkt integriert sind.

In einer zweckmäßigen konkreten Ausführungsform ist die Exzenterscheibe Bestandteil einer abgesetzten kreisrunden Stufenscheibe, wobei die Stufenscheibe und/oder die Exzenterscheibe Werkzeugansätze zum Ansetzen eines Einstellwerkzeugs aufweist. Die Stufenscheibe ist verliersicher in einer als kreisrunde Blechsicke ausgebildeten Ausnehmung des Türteils verdrehbar aufgenommen. Als Werkzeugansatz können gemäß Anspruch 7 einfach zwei bezüglich der Scheibenmitte gegenüberliegende Bohrungen verwendet werden.

Zweckmäßig sind nach Anspruch 8 das Exzenter-Einstellelement und das zugeordnete Fixierelement von einer inneren Türkastenwand her zugänglich angebracht und durch eine Blende abdeckbar. Alternativ können bei abgenommener Türinnenverkleidung die erläuterten Türjustierungen vorgenommen werden.

Anhand einer Zeichnung eines Ausführungsbeispiels wird die Erfindung näher erläutert.

Es zeigen:
- Fig. 1: eine schematische Draufsicht auf ein Türteil einer Kraftfahrzeug-Tür,
- Fig. 2: eine schematische, perspektivische Darstellung eines Exzenter-Einstellelements,
- Fig. 3: eine schematische Draufsicht auf das Exzenter-Einstellelement gemäß Fig. 2, und
- Fig. 4: eine schematische, vergrößerte Darstellung einer Rückansicht einer als Ausnehmung im Türteil ausgebildeten Blechsicke.

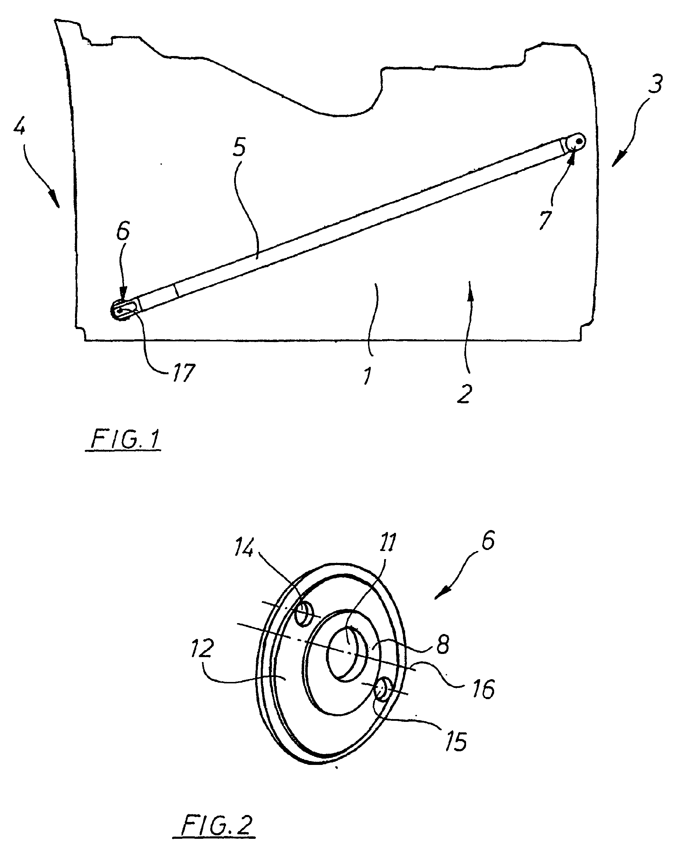

In der Fig. 1 ist schematisch ein Türteil 1 einer Kraftfahrzeug-Tür 2 dargestellt, dass eine Scharnierseite 3 sowie eine dieser Scharnierseite 3 gegenüberliegende Schlossseite 4 aufweist.

Diese Kraftfahrzeug-Tür 2 umfasst einen Aufprallträger 5, der als Diagonalträger ausgebildet ist und sich von einem oberen Scharnierseitenbereich in einen unteren scharnierfernen Schlossseitenbereich erstreckt. Dieser Aufprallträger 5 ist mit einem Exzenter-Einstellelement 6 als erster Befestigungsvorrichtung am scharnierfernen Aufprallträgerende angebracht, während die eine dem Exzenter-Einstellelement gegenüberliegende scharnierseitige Befestigungsvorrichtung 7 hier ohne Exzenter-Einstellelement für eine im wesentlichen ortsfeste Befestigung ausgebildet ist.

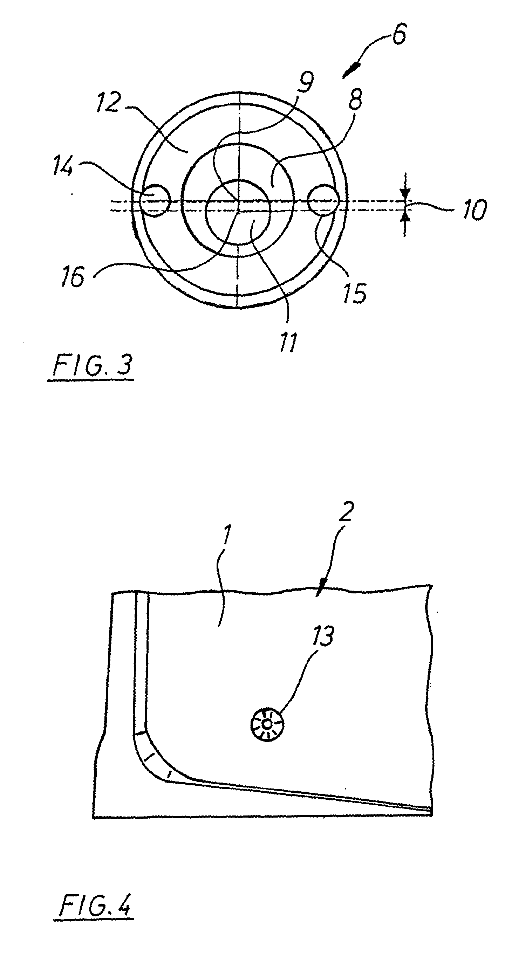

Wie dies insbesondere aus den Figuren 2 und 3 ersichtlich ist, die eine schematische, perspektivische Ansicht (Fig. 2) sowie eine Draufsicht (Fig. 3) auf das Exzenter-Einstellelement 6 zeigen, umfasst dieses Exzenter-Einstellelement 6 eine kreisrunde Exzenterscheibe 8 mit einer gegenüber dem Kreismittelpunkt 9 um den Exzenterversatz 10 versetzten Exzenterbohrung 11.

Den Figuren 2 und 3 kann zudem weiter entnommen werden, dass die Exzenterscheibe 8 ein Bestandteil einer abgesetzten, kreisrunden Stufenscheibe 12 ist, die zusammen mit der Exzenterscheibe 8 das Exzenter-Einstellelement 6 bildet.

Die Stufenscheibe 12 ist verliersicher in einer in der Fig. 4 lediglich schematisch dargestellten, als kreisrunde Blechsicke 13 ausgebildeten Ausnehmung des Türteils 1 verdrehbar aufgenommen.

Die Exzenterscheibe 8 ist randformschlüssig und verdrehbar in der Stufenscheibe 12 aufgenommen, wobei das zugeordnete Aufprallträgerende eine Fixierschraube 17 für einen formschlüssigen Eingriff in die Exzenterbohrung 11 aufweist, um die Exzentereinstellung zu fixieren.

Wie dies den Figuren 2 und 3 zudem weiter entnommen werden kann, weist die Stufenscheibe 12 Werkzeugansätze 14, 15 zum Ansetzen eines Einstellwerkzeugs auf, wobei die Werkzeugansätze 14, 15 als zwei bezüglich der Scheibenmitte gegenüberliegende Bohrungen ausgebildet sind.

Im hier dargestellten Beispielfall ist das Exzenter-Einstellelement 6 sowie die zugeordnete Fixierschraube 17 von einer Türkastenwand her zugänglich angebracht und durch eine Türinnenverkleidung, die hier nicht dargestellt ist, abgedeckt.

Die Exzenter-Achse 16 verläuft somit hier in etwa quer zur Türebene sowie in etwa quer zum Aufprallträger 5, so dass bei einer Exzenterverdrehung der Befestigungspunkt zwischen Aufprallträgerende und zugeordnetem Türteil 1 für eine Türausrichtung im Rahmen des Exzenterversatzes 10 in der Lage verändert werden kann. Die eingestellte Lage des Aufprallträgerendes und/oder die eingestellte Exzentereinstellung ist dann durch Festziehen der Fixierschraube 17 fixierbar. Durch eine derartige Exzenterverstellung aus einer spannungsfreien "Null-Lage" können somit Verspannungskräfte für eine gezielte Verformung der Tür erzeugt werden, wodurch diese außenhautbündig mit äquidistanten Fugen zu angrenzenden Karosseriebauteilen justierbar ist.

## Patentansprüche

1. Kraftfahrzeug-Tür
mit einer Scharnierseite (3) und einer gegenüberliegenden Schlossseite (4)
mit einem Aufprallträger (5), der in der Tür angeordnet ist und sich von einem Bereich an der Scharnierseite (3) in einen scharnierfernen Bereich in Richtung der Schlossseite (4) erstreckt,
mit einer ersten Befestigungsvorrichtung (6) zur Befestigung eines Aufprallträgerendes an einem Türteil und
mit einer zweiten Befestigungsvorrichtung (7) zur Befestigung des anderen gegenüberliegenden Aufprallträgerendes an einem Türteil,
**dadurch gekennzeichnet,**
**dass** wenigstens eine der Befestigungsvorrichtungen ein Exzenter-Einstellelement (6) aufweist, dessen Exzenter-Achse (16) etwa quer zur Türebene und quer zum Aufprallträger (5) verläuft, so dass bei einer Exzenterverdrehung der Befestigungspunkt zwischen Aufprallträgerende und zugeordnetem Türteil (1) für eine Türausrichtung im Rahmen des Exzenterversatzes (10) lageveränderlich ist, und
**dass** die durch den Exzenter eingestellte Lage des Aufprallträgerendes und/oder die emgestellte Exzentereinstellung fixierbar ist.

2. Kraftfahrzeug-Tür nach Anspruch 1, **dadurch gekennzeichnet, dass** der Aufprallträger (5) ein Diagonalträger ist, der sich von einem oberen Scharnierseitenbereich in einen unteren scharnierfernen Schlossseitenbereich erstreckt.

3. Kraftfahrzeug-Tür nach Anspruch 1 oder Anspruch 2, **dadurch gekennzeichnet,**
**dass** die erste Befestigungsvorrichtung mit einem Exzenter-Einstellelement (6) am scharnierfernen Aufprallträgerende angebracht ist, und
**dass** die zweite scharnierseitige Befestigungsvorrichtung (7) ohne Exzenter-Einstellelement für eine im wesentlichen ortsfeste Befestigung ausgebildet ist.

4. Kraftfahrzeug-Tür nach einem der Ansprüche 1 bis 3, **dadurch gekennzeichnet,**
**dass** das Exzenter-Einstellelement (6) aus einer kreisrunden Exzenterscheibe (8) mit einer gegenüber dem Kreismittelpunkt (9) um den Exzenterversatz (10) versetzten Exzenterbohrung (11) besteht, wobei die Exzenterscheibe (8) in einer Ausnehmung (13) des zugeordneten Türteils (1) randformschlüssig und verdrehbar aufgenommen ist, und
**dass** das zugeordnete Aufprallträgerende ein Eingriffelement (17) für einen formschlüssigen Eingriff in die Exzenterbohrung (11) aufweist.

5. Kraftfahrzeug-Tür nach Anspruch 4, **dadurch gekennzeichnet, dass** das Eingriffelement eine Fixierschraube (17) für die Fixierung der Exzentereinstellung umfasst.

6. Kraftfahrzeug-Tür nach Anspruch 4 oder 5, **dadurch gekennzeichnet,**
**dass** die Exzenterscheibe (8) Bestandteil einer abgesetzten, kreisrunden Stufenscheibe (12) ist, wobei die Stufenscheibe (12) und/oder die Exzenterscheibe (8) Werkzeugansätze (14, 15) zum Ansetzen eines Einstellwerkzeugs aufweist, und
**dass** die Stufenscheibe (12) verliersicher in einer als kreisrunde Blechsicke (13) ausgebildeten Ausnehmung des Türteils (1) verdrehbar aufgenommen ist.

7. Kraftfahrzeug-Tür nach Anspruch 6, **dadurch gekennzeichnet, dass** die Werkzeugansätze (14, 15) als zwei bezüglich der Scheibenmitte gegenüberliegende Bohrungen ausgebildet sind.

8. Kraftfahrzeug-Tür nach einem der Ansprüche 1 bis 7, **dadurch gekennzeichnet, dass** das Exzenter-Einstellelement (6) und ein zugeordnetes Fixierelement (17) von einer Türkastenwand her zugänglich angebracht und durch eine Blende abdeckbar sind.

## Claims

1. A vehicle door
with a hinged side (3) and opposite lock side (4),
with an impact beam (5), provided in the door and extending from a region on the hinged side (3) in direction of the lock side (4) to a region which is remote from the hinge,
with a first fastening device (6) for fixing one end of the impact beam to part of the door, and
with a second fastening device (7) for fixing the other opposite end of the impact beam to part of the door,
**characterized in that**
at least one of the fastening devices comprises an eccentric adjusting element (6), the eccentric axis (16) of which extends approximately perpendicular to the plane of the door and perpendicular to the impact beam (5) so that, with eccentric rotation, the position of the fixing point between the end of the impact beam and the associated part (1) of the door can be adjusted for the purpose of aligning the door within the limits of the eccentric offset (10),
and **in that** the position of the end of the impact beam as adjusted by the eccentric, and/or the adjusted eccentric setting can be fixed.

2. A vehicle door according to Claim 1, **characterized in that** the impact beam (5) is a diagonal beam, which extends from an upper region on the hinged side to a lower region on the lock side which is remote from the hinge.

3. A vehicle door according to Claim 1 or Claim 2, **characterized in that**
the first fastening device with eccentric adjusting element (6) is mounted on the end of the impact beam which is remote from the hinge,
and **in that** the second fastening device (7) without eccentric adjusting element and disposed on the hinged side is formed as an essentially fixed attachment.

4. A vehicle door according to one of Claims 1 to 3, **characterized in that**
the eccentric adjusting element (6) consists of a circular eccentric disk (8) with an eccentric hole (11) offset relative to the central point (9) of the circle by the eccentric offset (10), in which case the eccentric disk (8) is accommodated in a recess (13) in the associated part (1) of the door so as to be form-fitted at the periphery and rotatable,
and **in that** the associated end of the impact beam has an interlocking element (17) for positive engagement in the eccentric hole (11).

5. A vehicle door according to Claim 4, **characterized in that** the interlocking element comprises a fixing screw (17) for fixing the eccentric setting.

6. A vehicle door according to Claim 4 or 5, **characterized in that**
the eccentric disk (8) is part of a recessed, circular, stepped disk (12), the stepped disk (12) and/or eccentric disk (8) having tool insertion points (14, 15) for application of an adjustment tool,
and **in that** the stepped disk (12) is accommodated, in such a way as to be rotatable and secure against loss, in a recess in part (1) of the door, said recess taking the form of a circular metal bead (13).

7. A vehicle door according to Claim 6, **characterized in that** the tool insertion points (14, 15) are formed as two holes located opposite one another relative to the centre of the disk.

8. A vehicle door according to one of Claims 1 to 7, **characterized in that** the eccentric adjusting element (6) and an associated fixing element (17) are mounted so as to be accessible from the wall of a door casing and can be protected by a cover.

## Revendications

1. Portière de véhicule automobile comprenant
un côté présentant la charnière (3) et un côté opposé présentant la serrure (4)
une barre pare-chocs (5) qui est disposée dans la portière et s'étend depuis une zone sur le côté présentant la charnière (3) dans une zone éloignée de la charnière en direction du côté présentant la serrure (4),
un premier dispositif de fixation (6) destiné à fixer une extrémité de la barre pare-chocs sur une partie de la portière et
un second dispositif de fixation (7) destiné à fixer l'autre extrémité opposée de la barre pare-chocs sur une partie de la portière,
**caractérisée en ce**
**que** au moins l'un des dispositifs de fixation présente un élément de réglage à excentrique (6), dont l'axe d'excentrique (16) s'étend à peu près transversalement au plan de la portière et transversalement à la barre pare-chocs (5) de sorte que lors d'une rotation de l'excentrique, la position du point de fixation entre l'extrémité de la barre pare-chocs et la partie de portière (1) associée puisse être modifiée afin d'aligner la portière dans le cadre d'un déport de l'excentrique (10), et
en ce que la position réglée par l'excentrique de l'extrémité de la barre pare-chocs et/ou le réglage par l'excentrique peut être fixé.

2. Portière de véhicule automobile selon la revendication 1, **caractérisée en ce que** la barre pare-chocs (5) est une barre diagonale qui s'étend depuis une zone supérieure du côté présentant la charnière dans une zone inférieure du côté présentant la serrure, éloignée de la charnière.

3. Portière de véhicule automobile selon la revendication 1 ou 2, **caractérisée en ce**
**que** le premier dispositif de fixation est monté avec un élément de réglage à excentrique (6) sur l'extrémité de la barre pare-chocs éloignée de la charnière, et
en ce que le second dispositif de fixation (7) côté charnière est réalisé sans élément de réglage à excentrique pour une fixation essentiellement fixe.

4. Portière de véhicule automobile selon l'une quelconque des revendications 1 à 3, **caractérisée en ce**
**que** l'élément de réglage à excentrique (6) se compose d'un disque de l'excentrique (8) circulaire présentant un perçage de l'excentrique (11) décalé par rapport au centre du cercle (9) du déport de l'excentrique (10), le disque de l'excentrique (8) étant logé dans un évidement (13) de la partie de portière (1) associée de manière rotative et par correspondance de forme de contour, et
en ce que l'extrémité de la barre pare-chocs associée présente un élément d'engagement (17) pour un engagement par correspondance de forme dans le perçage de l'excentrique (11).

5. Portière de véhicule automobile selon la revendication 4, **caractérisée en ce que** l'élément d'engagement comprend une vis de fixation (17) pour la fixation du réglage de l'excentrique.

6. Portière de véhicule automobile selon la revendication 4 ou 5, **caractérisée en ce**
**que** le disque de l'excentrique (8) est un composant d'une came (12) circulaire, décalée, la came (12) et/ou le disque de l'excentrique (8) présentant des saillies pour outil (14, 15) pour fixer un outil de réglage, et
en ce que le disque de l'excentrique (12) est logé de manière rotative sans risque de perte dans un évidement de la partie de portière (1) réalisé comme une moulure de tôle circulaire (13).

7. Portière de véhicule automobile selon la revendication 6, **caractérisée en ce que** les saillies pour outil (14, 15) sont réalisées comme deux perçages opposés par rapport au milieu du disque.

8. Portière de véhicule automobile selon l'une quelconque des revendications 1 à 7, **caractérisée en ce que** l'élément de réglage à excentrique (6) et un élément de fixation (17) associé sont montés de manière à être accessible depuis une paroi de la carrosserie de portière et peuvent être recouverts par un panneau.
